# EUROPEAN PATENT SPECIFICATION

(11) **EP 1 986 838 B1**
(45) Date of publication and mention of the grant of the patent: **31.03.2010**
(21) Application number: 07701727.5
(22) Date of filing: 29.01.2007
(51) Int. Cl.: B29C 45/40

(54) **APPARATUS FOR REMOVING A MOLDED ARTICLE FROM A MOLD, AND A MOLDED ARTICLE**
VORRICHTUNG ZUM ENTFERNEN EINES FORMKÖRPERS AUS EINEM FORMWERKZEUG UND FORMKÖRPER
APPAREIL POUR RETIRER UN ARTICLE MOULE D'UN MOULE, ET ARTICLE MOULE

(30) Priority: 16.02.2006 US 355197
(43) Date of publication of application: 05.11.2008
(73) Proprietor: Husky Injection Molding Systems Ltd., Bolton, ON L7E 5S5 (CA)
(72) Inventor: MILLER, William E., Ann Arbor, Michigan 48103 (US)
(74) Representative: Cramphorn, Conrad
(86) International application number: PCT/CA2007/000105
(87) International publication number: WO 2007/093032

(56) References cited:
- JP-A- 6 126 740
- JP-A- 60 017 207
- US-A- 5 217 732
- US-A1- 2004 145 082
- US-A1- 2005 136 150
- MENGES G; MICHAELI W; MOHREN P: "How to make injection molds" 2000, HANSER , CINNCINNATI , XP002521341 * pages 259-264 *

## Description

### TECHNICAL FIELD

The present invention relates to an apparatus for injection molding of preforms so that their subsequent reheating and blow-molding into containers is simplified. In particular, the present invention relates to an apparatus for providing an improved neck-ring or neck split components of an injection mold that allows for an earlier ejection or removal of the preform from the injection mold, thus reducing time needed to manufacture the preform. The apparatus is particularly well suited for thermoplastic polyester polymer materials such as polyethylene terephthalate. The present invention also relates to a molded plastic preform using the apparatus of the present invention.

### BACKGROUND OF THE INVENTION

Well known by those skilled in the art, the preform is a tube with a generally hollow circular cross-sectional configuration having a body portion, a closed end portion with a generally hemispherical configuration, and an open end. About the open end and superimposed between the open end and the body portion is a generally circular neck-finish. Ultimate container needs will dictate specific details of preform size and shape. Although smaller and larger sizes are feasible, technicians make specific preform configurations for specific container configurations with a capacity typically between 250 ml to four liters.

For receiving a closure (i.e., a lid), the neck-finish has a configuration generally having a sealing surface portion adjacent to the open end, a handling ring portion adjacent to the body portion that helps facilitate manufacture of the blow-molded container, and a threaded portion between the sealing surface and handling ring for attachment of the closure. To assure proper closure attachment and seal, the neck-finish requires sufficiently consistent and accurate dimensional characteristics generally free of distortions or deformations.

While a screw thread is a common form, the threaded portion can be any form of lugs, snap-rings, or other appendages for attaching the closure, such as, but not limited to, a standard crown neck finish.

Also well known by those skilled in the art is the injection molding process. The process involves injecting a thermoplastic polymer or other plastic material at a molten elevated temperature through a small opening or nozzle into the injection mold. The injection mold is an assembly of various components creating a closed and sealed cavity that allows the molten polymer to form the preform without leakage between components. Once the injected polymer material sufficiently cools and solidifies, selected components of the injection mold separate to allow preform ejection or removal.

In a commonly used process for blow molding the container, an oven of a blow-molding machine heats and softens the polymer material of the body portion of the preform but not the neck-finish. The blow-molding machine, holding the preform by the handling ring portion of its neck-finish, places the heated preform into a blow-mold cavity where pressurized air then inflates and expands to conform the preform to the blow-mold cavity thus forming the container. The neck-finish configuration of the blow-molded container generally remains unchanged and retains the configuration acquired when initially injection molded as the preform.

The time needed to injection-mold the preform is typically limited by the time needed to cool and solidify injected polymer material sufficiently to permit removal of the part from the mold without causing deformation or distortion. Usually, a segment of the preform having a thicker wall cross-sectional dimension determines the cooling time required. The plastic within the thicker wall cross-sectional segment generally requires more time to cool and solidify sufficiently and the neck-finish often has one of the thicker wall cross-sectional segments.

To form the open end and hollow circular cross-sectional configuration of the preform, the injection mold assembly typically uses a core component that is a substantially straight-sided rod with a longitudinal axis. Surrounding and adjacent to the core component is the neck-ring or neck split components. The neck-ring is a pair of semicircular pieces that accurately shape the dimensional characteristics of the neck-finish and assists in removing the preform from the core component.

During preform removal, an apparatus within the injection mold causes the neck-ring components to initially move in unison in a direction parallel to the longitudinal axis of the core rod. The neck-ring components bearing against the threaded portion and handling ring portion of the neck-finish cause the preform to slide in a longitudinal direction from the core component.

Molten thermoplastic polymer material at its elevated temperature will generally shrink as it cools and solidifies. Accordingly, in manufacture, the preform will generally shrink against the core component as the material cools. As the core component restrains the shrinkage, molecular forces develop that cause the preform to grip the core's side. Forces acting on the threaded portion and handling ring portion of the neck-finish during removal must transmit through the wall of the preform to overcome frictional resistance created by the grip of the preform against the core. In other words, the forces applied to the threaded portion and the handling ring portion of the neck-finish is in shear with the resistance of the grip of the preform against the core.

The polymer material does not solidify at the same moment. Generally the material in direct contact with mold surfaces will solidify sooner than material not in direct contact. If the polymer material has not sufficiently solidified throughout the neck-finish wall cross-section, the neck-finish will not have sufficient strength to transmit the force and thus can deform and distort during removal causing the sealing surface portion to become irregular and incapable of maintaining proper seal with the closure. Consequently, molding technicians extend cooling time to assure polymer solidification of the neck-finish thus preventing distortion. For thermoplastic polyester polymer materials, the time typically needed to inject and cool the polymer and remove the preform is about 21 to 26 seconds.

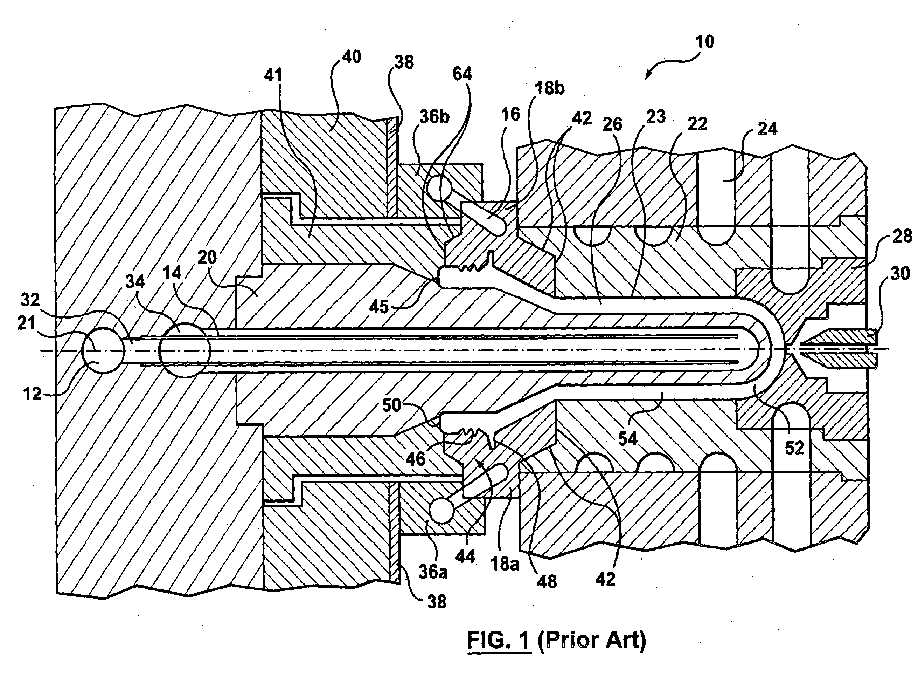

Thus, in most preform designs, the portion limiting the earliest stripping time is the neck finish portion. Figure 1 is a cross-sectional view of a preform mold assembly 10 having a core cooling channel 12, a core cooling tube 14, a neck-ring cooling channel 16, a neck-ring or neck split components 18a and 18b, a core component 20 having an axis 21, a mold cavity block 22 with a cavity surface 23, and a mold cooling channel 24 which extends circumferentially around the mold cavity block 22. Figure 1 also shows a preform 26, a mold gate insert 28, and an injection nozzle 30. The preform mold assembly 10 is an assembly of various components that creates a closed and sealed cavity that allows molten polymer injected into the cavity to form the preform 26 without substantial leakage between components. In Figure 1, the preform 26 has a configuration that is substantially identical to the closed cavity.

The core-cooling channel 12 includes a cooling inlet 32 and a cooling outlet 34. The neck-ring component 18a and 18b mount to the ejector bar 36a and 36b, and slide respectively on a wear pad 38 by a means of cams and gibs (not shown). The wear pad 38 fastens to a stripper plate 40. A core holder 41 retains the core component 20. The preform 26 has an open end 50, a closed end 52, a body portion 54, and a neck-finish 44. The neck-finish 44 has a sealing surface portion 45, a threaded portion 46, and a handling ring portion 48. The neck-ring components 18a and 18b comprise a pair of semicircular pieces that accurately shape the dimensional characteristics of the neck-finish 44 and assist in removing the preform 26 from the core component 20.

During the preform 26 removal or ejection, the preform mold assembly 10 initially separates along a parting line 42 allowing the core component 20, the core holder 41, the neck-ring components 18a and 18b, the preform 26, and other associated components to move in unison in a direction parallel to the axis 21 and thereby pull the preform 26 free from the mold cavity block 22, the mold gate insert 28, and the nozzle 30, thus separating the preform 26 from the cavity surface 23. Actuation of the stripper plate 40 then causes the ejector bar 36a, 36b and the neck-ring component 18a, 18b to initially move in unison in a direction parallel to the axis 21 to remove the preform 26 from the core component 20. Eventually, the neck-ring component 18a and the ejector bar 36a move moves in a first direction perpendicular to and away from the axis 21 on the wear pad 38 and simultaneously the neck-ring component 18b and the ejector bar 36b move moves in a second and opposite direction (of that taken by the neck-ring component 18a and the ejector bar 36a) perpendicular to and away from the axis 21 on the wear pad 38 setting the preform 26 entirely free from the preform mold assembly 10.

In addition to the distortion problem described above, another problem with known mold designs is where the neck ring halves do not seal against the core when they are closed (assembled), and the mold is then closed and clamped. After the mold has been opened and the part is ejected, the neck ring halves 18a and 18b that are carried forward by the stripper plate 40 are separated from each other. Before the next molding cycle can commence, the ejection mechanism must be reversed to restore the neck rings and stripper plate to their molding positions, shown in Figure 1. This reversing procedure includes moving the neck rings towards each other until they touch during the backward stroke of the stripper plate so that, by the time the stripper plate has fully returned (in the position shown in Figure 1), the neck rings are completely closed with their mutual parting surfaces touching. The complete closing of the neck rings can be performed at any point during the stroke of the return of the stripper plate as the neck rings are not in any danger of touching the core at any point.

In designs where the neck rings are going to touch the core in the mold closed position, it is preferable that they themselves are first closed so that when they finally touch the core they do so as an assembled pair. In the case of an earlier Husky design, the neck rings had a "shut-off" cylindrical surface that was parallel to the longitudinal axis of the core and touched the core diameter. However, this design is not optimal since, if there is a gap between these two cylindrical surfaces greater than about 0.005 inch, the risk of plastic leaking through this gap during injection is significant. Consequently, this type of design requires close tolerance manufacture of these surfaces to ensure the assembled gap is less. Unfortunately, molds wear as they are used, and eventually a design like this leaks. Another early Husky design had a tapered, or conical shut-off, surface that contacted a correspondingly mating tapered surface on the core. These two surfaces were pressed together during molding, causing a positive seal that prevents plastic leakage.
However, this design was not optimal because the preform still had neck-ring distortions when it was stripped from the core.

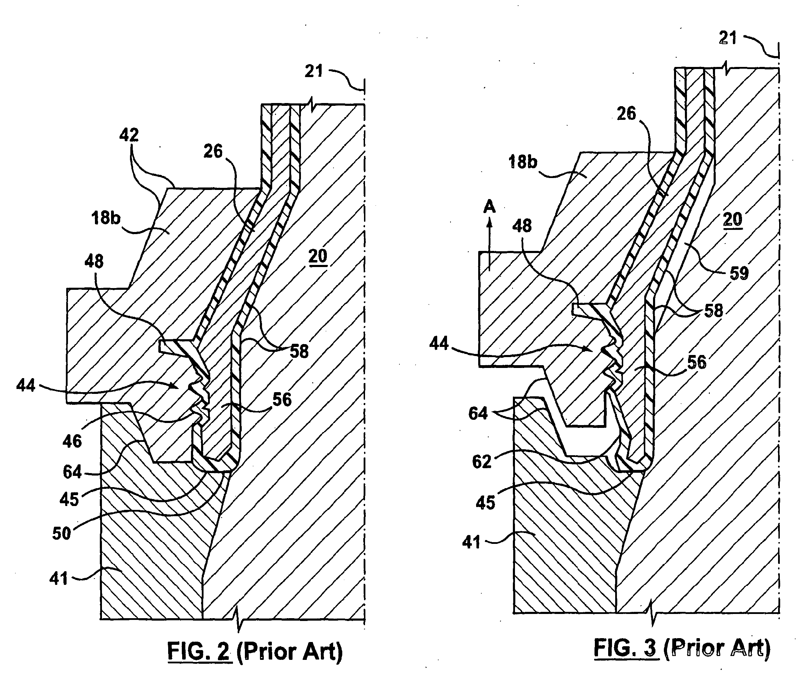

Figure 2 is a partial cross-sectional view of selected components shown in Figure 1 and further showing the preform 26 having a wall thickness 56, and the core component 20 having a core surface 58. The mold cavity block 22 (not illustrated in Figure 2) has separated from the neck-ring 18b along the parting line 42.

Figure 3 is a partial cross-sectional view similar to Figure 2. The neck-ring 18b has initially moved in direction "A" parallel to the axis 21 to begin removal of the preform 26 from the core component 20. The neck-ring 18b (and 18a, not illustrated in Fig 3) has separated from the core holder 41 along a sub-parting line 64. Furthermore, the preform 26 has partially separated 59 from the core surface 58. The sub-parting line 64 ends at the neck-finish 44 adjacent to and between the sealing surface portion 45 and the threaded portion 46 (see Figure 2).

Molten thermoplastic polymer material at its elevated temperature will generally shrink as it cools and solidifies. Accordingly, in manufacture, the preform 26 will generally shrink against the core component 20 as the material cools. As the core component 20 restrains the shrinkage, molecular forces develop that cause the preform 26 to grip the core surface 58.

Forces acting through neck-ring 18b (and 18a, not illustrated in Fig 3) and ultimately bearing on the threaded portion 46 and the handling ring portion 48 of the neck-finish 44 during removal must transmit through the wall thickness 56 of the preform 26 to overcome friction created by the grip of the preform 26 against the core surface 58. If the polymer material has not sufficiently solidified throughout the neck-finish wall thickness 56, it will not have sufficient strength to allow transfer of forces to overcome friction of preform sticking around the core component 20 at about a point 60 of the core surface 58. This in turn will cause neck-finish distortion 62 as the neck-ring 18b (and 18a, not illustrated in Fig 3) move in direction "A." The distortion 62 causes the sealing surface 45 to become irregular (not illustrated) thus a closure (not illustrated) subsequently attached to the neck-finish 44 will not properly seal.

To assure that the polymer within the wall thickness 56 is sufficiently solid and rigid to transmit forces applied by the neck-ring 18a and 18b, without neck-finish distortion occurring during removal, molding technicians may extend the time to manufacture the preform 26. Typical molding time needed for manufacturing the preform 26 of thermoplastic polyester materials is about 21 to 26 seconds. An attempt to alleviate this problem was made in another early Husky design wherein a small portion of the neck ring (less than fifty percent) was made to contact an outer circumferential portion of the top sealing surface of the preform. However, this design suffered from two disadvantages. First the small area of contact between the neck ring and the top sealing surface still required substantial cooling time to prevent neck ring distortions. Second, this design had the cylindrical neck ring mating surfaces which allowed for leakage of the molten plastic.

U.S. Patent Nos. 4,521,177; 6,176,700; 6,220,850 and 6,413,075 show insert assembly arrangements for molding preforms. U.S. Patent Nos. 4,025,022; 4,125,246; 4,179,254; 4,632,357; 4,648,834; and 5,137,442 show other injection molding machines utilizing various stripping devices. However, none of these patents overcomes the disadvantages described above. ,

An apparatus according to the preamble of claim 1 is disclosed in US-A-2004145082. There is a need for a neck finish portion cooling apparatus, which provides rapid, efficient neck cooling while further reducing the molding cycle time to further decrease the cost of producing molded plastic preforms.

### SUMMARY OF THE INVENTION

It is an advantage of the present invention to provide a cooling apparatus for efficiently cooling molded plastic preforms. This advantage is achieved with an apparatus according to claim 1 and a preform according to claim 8.

### BRIEF DESCRIPTION OF THE DRAWINGS

The advantageous structure and/or function according to the present invention will be more easily understood from the following detailed description of the preferred embodiments and the appended Drawings, as follows.
Figure 1 is a cross-sectional view of a known preform injection mold assembly before ejection of a molded preform having a neck-finish and a sealing surface.
Figure 2 is a partial cross-sectional view of selected components of the assembly shown in Figure 1, and the neck-finish portion of the preform before a neck-ring moves to complete preform ejection.
Figure 3 is a partial cross-sectional view of components shown in Figure 2 with the preform partially removed and showing a typical neck-finish distortion.
Figure 4 is a cross-sectional view of a preform injection mold assembly, which is not according to the present invention, before ejection of the molded preform.
Figure 5 is a partial cross-sectional view of selected components of the assembly shown in Figure 4 and the neck-finish portion of the preform before a reconfigured neck-ring moves to complete preform ejection and further showing a core-lock neck-ring configuration.
Figure 6 is a partial cross-sectional view of components shown in Figure 5 with the preform partially removed and without the typical neck-finish distortion.
Figure 7 is a partial cross-sectional view similar to Figure 5 showing an embodiment not according to the invention having a cavity-lock neck-ring configuration.
Figure 8 is a partial cross-sectional view of similar to Figure 6 showing an embodiment not according to the present invention with the cavity-lock neck-ring configuration and with the preform partially removed and
without the typical neck-finish distortion.
Figure 9 is a partial cross-sectional view similar to Figure 5, showing an embodiment not according to the present invention with a step configuration along the sealing surface of the preform.
Figure 10 is a partial cross-sectional view similar to Figure 9, showing an embodiment of the present invention with a vented step configuration along the sealing surface of the preform.
Figure 11 is a partial cross-sectional view similar to Figure 9, showing an embodiment not according to the present invention with a vented step configuration along the sealing surface of the preform.

### DETAILED DESCRIPTION OF THE PREFERRED EMBODIMENT(S)

### 1. Introduction

The present invention will now be described with respect to several embodiments in which a neck ring applies a compressive force to the open, circular end of an injection-molded plastic preform before the preform is completely solidified, thus reducing cycle time, and in which conical neck ring mating surfaces are used to prevent leakage.

In brief, the embodiments of the present invention will redistribute the forces acting on the neck-finish during preform removal. By reconfiguring the neck-ring or neck split components to bear against not only the handling ring portion and the threaded portion, but also the sealing surface portion, the following embodiments are able to distribute forces over a larger area, thus reducing risk of neck-finish deformation and distortion during preform removal. The force now bearing against the sealing surface portion places some of the polymer within the neck-finish in compression. Furthermore, being in direct contact with mold components, the material that will be in compression is more likely to have solidified first, thus it is better equipped to overcome the resistance created by the grip of the preform against the core component. Accordingly, the reconfigured neck-ring components permit preform removal before polymer solidification throughout is complete. In trials, up to a five second reduction in preform manufacturing time has been achieved, without risk of neck-finish distortions.

In general, the following embodiments utilize an apparatus for removing a preform from an injection mold wherein the preform has a neck-finish comprising a handling ring portion, a threaded portion, and a sealing surface portion. The apparatus comprises a neck-ring that bears against a segment of said handling ring portion, a segment of said threaded portion, and a substantial segment of the sealing surface portion during the removal of the preform from the injection mold. The neck-ring removes said preform from a core component of the injection mold. The neck-ring forms the neck-finish including a segment of the handling ring portion, the threaded portion, and a first segment of the sealing surface portion during a process for injection molding the preform in the injection mold before the preform removal by the neck-ring. The core component forms a second segment of the sealing surface portion while the neck-ring forms the first segment. The neck ring also includes a conical, tapered portion to contact the core surface and tightly seal the neck ring halves together.

The sealing surface portion of the preform includes a circumjacent step formed by the neck-ring establishing the first segment as a subordinate sealing surface portion formed by the neck-ring and the second segment as a dominant sealing surface portion formed by the core component. The dominant sealing surface portion formed by the core component and the subordinate sealing surface portion formed by the neck-ring according to a preferred embodiment have a difference in elevation of about 0.025 to 0.125 mm (0.001 to 0.005 inch). The neck-ring removes a preform made of thermoplastic polymer such as thermoplastic polyester.

In the above-described injection mold for molding a preform, the mold has a pair of neck ring inserts that are used to both form the neck finish of the preform, and to eject the molded part off of the core. The neck ring design partially encapsulates the top sealing surface of the preform thereby utilizing part of that surface for the ejection action. In these embodiments, the neck ring inserts shut off and seal against the core of the mold at their interface where the top sealing surface is formed. In an alternative embodiment to be described below, this shut off interface is replaced with a vent.

The above-described embodiments are not according to the invention.

### 2. The structure

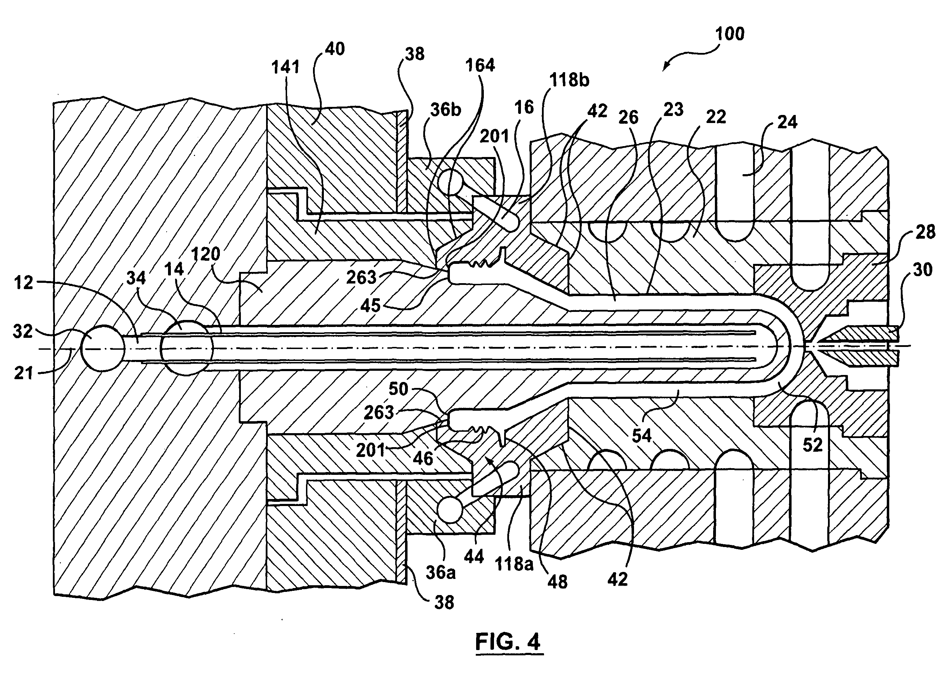

Figure 4 is a cross-sectional view of a preform mold assembly 100 of an embodiment not according to the invention before ejection of the molded preform 26. The assembly 100 has a neck-ring or neck split components 118a and 118b, a core component 120 having the axis 21, and a core holder 141. The neck-ring components 118a and 118b, core holder 141, and core component 120 form a sub-parting line 164 with an ending point, ending in a circumjacent fashion on the sealing surface portion 45 of preform 26. Other components of the reconfigured preform mold assembly 100 are similar to those discussed above with respect to preform mold assembly 10.

Figure 4 shows two notable features. First, a lifting portion 201 contacts substantially fifty percent of the outer circumferential portion of the top sealing surface to lift the preform from the core after the outer skin is somewhat solidified, to reduce neck ring' distortion. Second, the neck ring halves 118a, 118b each have a tapered, conical surface 263 disposed below and forming an acute angle with respect to the lifting portion 201, to tightly engage the outer surface of the core and prevent leakage.

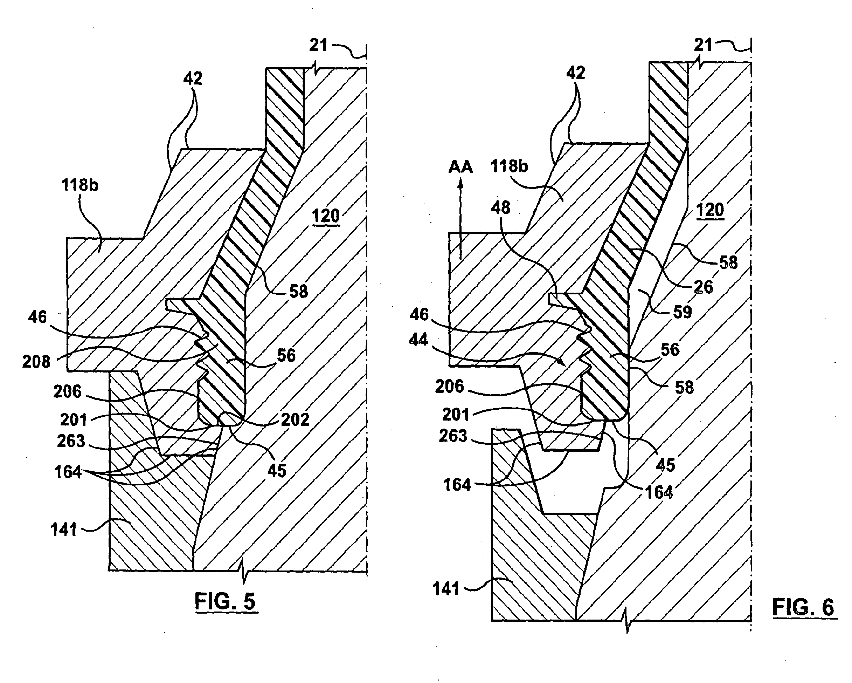

Figure 4 shows that the external tapers 263 on the neck rings 118a, 118b at parting lines 164 and 42 cause the neck rings to remain closed and pressed together while the mold is closed and subjected to clamping force. This same action ensures the tapered sealing surfaces of the neck ring assembly remain pressed against the core's matching tapered surface 164 in Figure 5.

The preform mold assembly 100 follows a similar sequence of operation as the preform mold assembly 10. That is, molten plastic is injected into the mold cavity via the injection nozzle 30 through the gate insert 28. The cooling channels of the injection mold 100 and the cooling channel of the core 120 cool the molten plastic and form preform 26 in the injection mold 100.

Figures 5-9 show, in greater detail, the neck ring designs that allow the ejecting action of the preform to occur earlier than otherwise would have been possible for a given preform design. With reference to Figure 5, the neck ring 118b has been extended in length (height) so that its molding surface includes a lifting portion 201 which engages and lifts a corresponding circular top sealing surface (an engagement portion) of the preform's top surface (at the preform's open end), when the neck ring is moved in the ejecting direction of arrow AA. As shown, the lifting portion 201 contacts substantially on half, but less than all of the top sealing surface of the preform's top surface. Of course, the design may be modified so that the lifting portion 201 contacts the entire top sealing surface.

The flat lifting portion 201 as part of the molding surface of the neck rings is used to allow the part to be ejected earlier in the molding cycle than it would have been in earlier designs. As explained above, the injection resin cools from the outside inwards by virtue of its contact with the cooled molding surfaces. Consequently, the portion of the top sealing surface being formed by the neck rings will cool similarly - from the outer surface inwardly. The formation of a solid skin that can resist ejection forces without deforming determines when the ejection process can start. By including the flat portion 201 on the neck ring, the solidified portion of the preform can be acted on by the neck ring when ejecting the part. The ejection force acts along a line parallel to the centerline of the core that is perpendicularly to the surface of the flat lifting portion 201. This is an optimal condition. In earlier designs that did not have this extended flat portion, any ejection motion from the neck ring begins acting on the corner radius of the top sealing surface. Applying the force to this radial surface induces vectors trying to push the part inwardly, possibly causing the part's neck finish diameter to be reduced thereby risking the part not being molded within its dimensional specification. Consequently the early ejection benefit is much more risky and consequently unlikely to be realized with such a design. The neck ring halves 118a, 118b also have tapered surfaces 263 that form a conical sealing surface for the outer surface of the core when the neck rings are closed and the core is inserted into the mold. These tapered surfaces form an acute angle of less than 90 degrees with respect to the lifting portion 201. The combination of the tapered surfaces 263 and the substantial lifting portion 201 provides a neck ring design which allows for early preform ejection with minimal leakage. The fact that the sharp angle between the tapered surface 263 and the lifting portion 201 is placed near the center (or inside) of the top sealing surface 45 prevents leakage through part line 164 while providing a straight compressive lifting force to the already-solidified skin portion of the top sealing surface.

The neck ring also has a cylindrical surface 206, which contacts contact the preform along a line substantially parallel to the lifting direction. Further, the neck ring also has a threaded portion 208, which contacts the threaded portion of the preform. Figure 5 also shows the preform 26 having wall thickness 56 and core component 120 having core surface 58.

Mold cavity block 22 (not illustrated in Figure 5) has separated from neck-ring 118b along parting line 42. As shown, the lifting portion 201 is configured so as to not contact an inner circumferential portion of the molded plastic preform's top surface.

Figure 6 is a partial cross-sectional view similar to Figure 5. The neck-ring 118b has initially moved in direction of arrow AA parallel to the axis 21 to begin removal of the preform 26 from the core component 120. The neck-ring 118b (and 118a, not illustrated in Fig 6) has separated from the core holder 141 along a reconfigured sub-parting line 164. Furthermore, the preform 26 has partially separated 59 from the core surface 58.

The benefit of including the lifting portion 201 is clearly shown when the stripping action takes place, as illustrated in Figure 6. The neck ring lifting portion 201 pushes directly on that part of the preform which is closest to the core where shrinkage causes the preform to resist stripping.

The ejecting force exerted by the lifting portion 201 on the preform neck finish is a combination of a shear force (originating from the sealing surface, threaded portion, and support ledge surfaces) and a compression force (originating from the top surface 201). This latter force is applied through the solidified skin portion of the preform at 201 and therefore can transmit its effect to cause stripping of the preform as soon as that skin portion is sufficiently solidified. This solidification occurs sooner in the molding cycle than the solidification of the core portion 18 since the top sealing surface is in direct contact with the respective cooled mold components, the core 10, and the neck ring 20. In contrast, the core portion 18 must wait for the conduction of its heat through the surrounding plastic to reach those cooled molding surfaces before solidification is effected. Consequently, defect-free stripping of the preform can be commenced earlier in the molding cycle. Savings of from 2 to 5 seconds in cycle time may be achieved, depending on preform mold design configuration.

The relative dimensions of the lifting portion 201 will depend upon the dimensions of the particular preform being cooled, the preform molding temperature, the mold cooling apparatus, etc.
Further, the lifting portion 201 may be a flat surface or a surface having grooves, pads, or other patterns therein configured to assist in cooling/lifting the preform. The lifting portion 201 may be made of the same metal as the neck ring, of a different metal, or of a plastic, designed to rapidly cool and securely lift the preform sealing surface.

Thus, the preform 26 removal or ejection forces, acting through reconfigured neck-ring 118b (and 118a, not illustrated in Fig 6), bear not only on the threaded portion 46 and the handling ring portion 48 of the neck-finish 44 but also on the sealing surface portion 45 of the neck-finish 44. The force now bearing against the sealing surface portion 45 places some of the polymer within the neck-finish 44 in compression.
Furthermore, being in direct contact with mold components, the material that will be in compression is more likely to have solidified first, thus it is better equipped to overcome the resistance created by the grip of the preform 26 against the reconfigured core component 120.

By allowing forces to bear on the sealing surface portion 45 lessens the need for removal forces to transmit entirely through the wall thickness 56 where some of the polymer may not have completely solidified. Accordingly, wall thickness 56 no longer needs to be as rigid to overcome friction created by the grip of the preform 26 against the core surface 58 thus allowing an earlier removal of preform 26 from reconfigured mold assembly 100 without risk of distortions or deformations. Trials indicate up to a five second reduction of overall preform 26 manufacturing time.

Those skilled in the art generally refer to a neck-ring arrangement as shown in Figure 5 as a core-lock configuration.

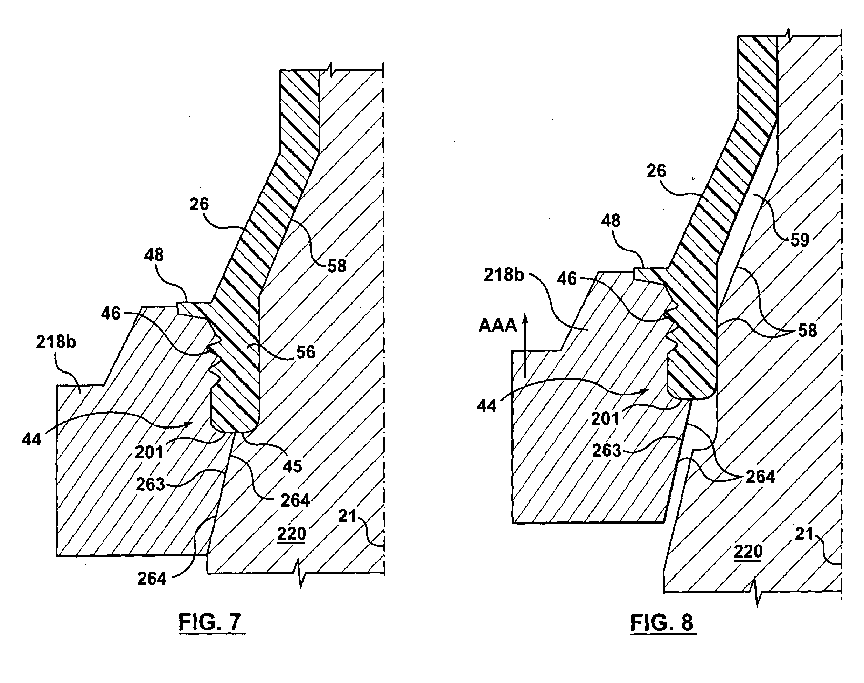

Figure 7 illustrates an alternative cavity-lock neck-ring configuration showing an alternative neck-ring component 218b (alternative neck-ring component 218a is not illustrated), an alternative core component 220, and an alternative core holder (not shown) with an alternative sub-parting line 264.

Figure 8 is a partial cross-sectional view similar to Figure 7.
Alternative neck-ring 218b has initially moved in direction "AAA" parallel to axis 21 to begin removal of preform 26 from alternative core component 220. Alternative neck-ring 218b (and 218a, not illustrated in Fig 8) has separated from alternative core holder (not shown) and alternative core component 220 along alternative sub-parting line 264. The alternative sub-parting line 264 ends on the sealing surface portion 45 in a similar circumjacent fashion as reconfigured sub-parting line 164.

Preform 26 removal or ejection forces, acting through alternative neck-ring 218b (and 218a, not illustrated in Fig 8) of this cavity-lock neck-ring configuration, bear not only on the threaded portion 46 and handling ring portion 48 of the neck-finish 44 but also on the sealing surface portion 45 of neck-finish 44 in a similar fashion as the core-lock configuration.

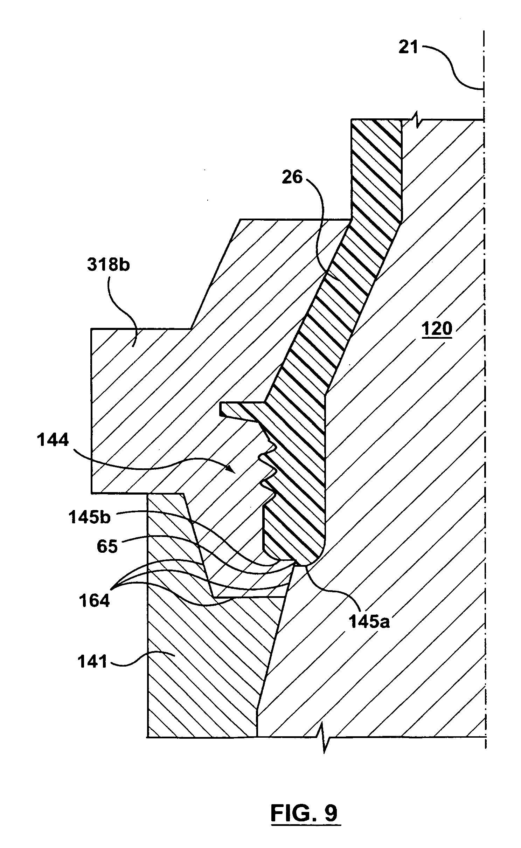

Figure 9 is a partial cross-sectional view illustrating another embodiment not according to the invention that creates a slightly modified neck-finish 144 on preform 26 having a sealing surface step 65 in profile and circumjacent with modified neck-finish 144 that corresponds with the end of reconfigured parting line 164. The circumjacent sealing surface step 65 establishes a slightly modified sealing surface portion with two elevations, dominant sealing surface 145a and subordinate sealing surface 145b having a difference in elevation in a direction parallel to axis 21 of approximately 0,025 to 0,127 mm (0.001 to 0.005 inch), more preferably 0.025 to 0.050 mm (0.001 to 0.002 inch). Dominant sealing surface 145a is first in contact with the closure (not illustrated) while attaching the closure.

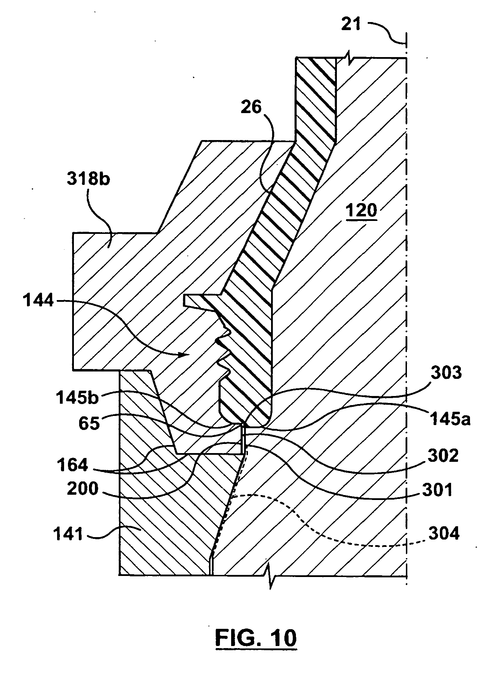

Figure 10 illustrates an embodiment of the present invention in which venting takes place along the parting line 164. By comparing Figure 10 with Figure 9, the differences become readily apparent. The parting line 164 is reconfigured to provide a vent 302 between the core 120 and the neck ring inserts 318a and 318b when in the mold-closed position. Specifically, there is a gap in the range of about 0.02-0.1 mm between the cylindrical neck ring surface (a core-facing surface) 200 and the cylindrical core surface 301 to permit venting of air contained in the closed mold cavity during filling of the molding material.

Preferably, the venting path is continued via local grooves 304 machined in the tapered locking surface of the core to provide a continuous venting path to ambient conditions found in clearance space between the shank of the core 120 and the inner diameter of the locking ring 141. Providing a vent in this location improves the rate of filling of the neck portion of the molded article and helps form a defect-free sealing surface. During the injection phase of the molding cycle, the rapid filling of the injected material pushes against the air trapped within the closed cavity space. Unless this air can readily escape it becomes quickly compressed and overheated and thereby may cause the leading edges of the material to burn.
Second, unless the air is allowed to escape the molded part may not be completely formed, some small volume of trapped air may prevent the material from reaching its destination before it freezes.

As shown in Figure 10, the vent 302 is disposed substantially parallel to the preform longitudinal axis, or substantially perpendicular to the sealing surfaces 145a and 145b. Thus, the step 65 is also substantially parallel to the longitudinal axis. The step 65 provides a better seal when a lid is screwed down on the neck of the finished product. The sharp edge on the step allows the slightly malleable lid undersurface to deform and produce a better liquid and air-proof seal. According to the invention, a small amount of molten plastic will enter the vent 302 forming a small protrusion 303 on the dominant sealing surface 145a adjacent the step 65. This protrusion will also aid in forming a more effective seal with the lid.

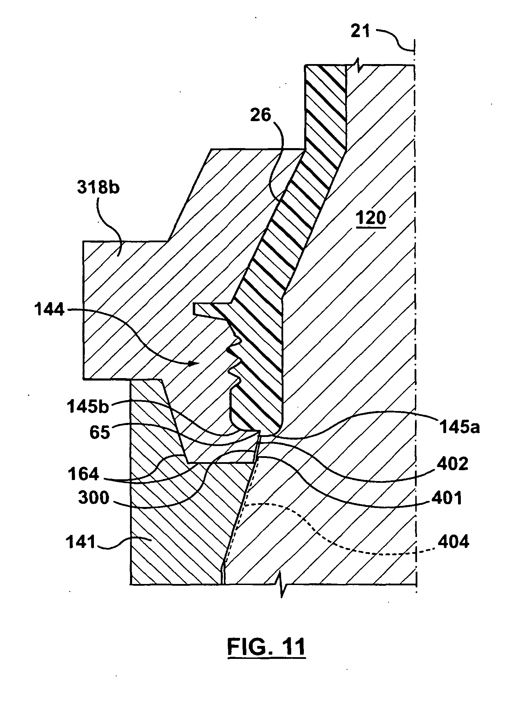

Figure 11 illustrates a second, alternative embodiment according to the present invention. In this embodiment, the parting line 164 is reconfigured to provide a vent 402 between the core 120 and the neck ring inserts 318a and 318b. Specifically, there is a gap in the range of about 0.02-0.1 mm between the frustro-conical neck ring surface 300 and the frustro-conical core surface 401 to permit venting of air contained in the closed mold cavity during filling of the molding material. Preferably, the venting path is continued via local grooves 404 machined in the tapered locking surface of the core to provide a continuous venting path to ambient conditions found in clearance space between the shank of the core 120 and the inner diameter of the locking ring 141. Of course, the local grooves may comprise one or more grooves machined into the neck ring and/or the core holder. The same benefits described above also result here. The vent 402 is disposed at an acute angle (e.g., 15 degrees) with respect to the preform longitudinal axis and the plane of the sealing surfaces 145a, and at an obtuse angle with respect to the sealing surface 145b. Preferably; the vent 402 is disposed to angle circumferentially away from the longitudinal axis of the molded article. Of course, the vent 402 could be angled in the opposite direction, toward the longitudinal axis of the molded article.

### 3. The Process

In operation, the molten plastic is injected into the mold, and the preform is formed between the core and the cavity wall. Thereafter, in order to eject the preform from the core, the neck ring is lifted in the direction of arrow AA. As is clear in Figs. 5-8, the lifting portion 201 contacts the top sealing surface and lifts the preform away from the core. Preferably, the interior of the preform is not yet solidified, although the skin of the preform top surface is preferably solid at this point.

The embodiments show multiple side acting inserts (neck rings) that remain closed (like a contiguous ring) to eject (strip) the part from the core by pushing on its end (sealing surface). But, later in the ejector stroke, the neck rings move sideways to clear the external protruding features (thread and support ledge) near the END of the ejector stroke. This side action is caused by cams acting on rollers mounted to the end of the ejector bars (not shown) on which the neck rings are mounted. Therefore, the embodiment pushes against the end of the part during the majority (50-90 %) of the ejector stroke.

Once separated from the core, the preform may be moved to a post mold cooling station, or the preform may be ejected into a shipping container. Since the preform is stripped from the core by a force operating primarily on the top sealing surface instead of the threads, the interior portion of the preform does not have to be completely solidified, allowing earlier stripping and a reduction in cycle times of from 2 second to 5 seconds.

### 4. Advantageous Features

Advantageous features according to the embodiments include:
- A preform mold neck ring molding surface configuration that includes part of the top surface of the preform molding surface.
- A preform mold neck ring configuration that can impart a stripping action force to a preform surface that is perpendicular to the direction of said stripping action force.
- A neck ring structure with a surface for pushing against the molded part in a plane perpendicular to the axis of ejection, and including a vent between the neck ring structure and the core.

### 5. Conclusion

Thus, what has been described is an apparatus for efficiently ejecting molded plastic preforms from the core, achieving reduced cycle time and cost.

The individual components shown in outline or designated by blocks in the attached Drawings are all well-known in the injection molding arts, and their specific construction and operation are not critical to the operation or best mode for carrying out the invention.

While the present invention has been described with respect to what is presently considered to be the preferred embodiments, it is to be understood that the invention is not limited to the disclosed embodiment. To the contrary, the invention is intended to cover various modifications included within the scope of the appended claims.

## Claims

1. Apparatus for ejecting a molded plastic preform (26) from a molding structure having a mold core (120), the apparatus comprising a neck ring lifting structure (318a, 318b) having:
a first portion configured to contact a side portion of said molded plastic preform (26) along a line substantially parallel to a lifting direction;
a second portion configured to contact substantially fifty percent of an open end surface of the molded plastic preform (26) along a line substantially perpendicular to the lifting direction, wherein a circumjacent sealing surface step (65) of the molded plastic preform (26) is defined on the open end surface of the molded plastic preform (26) including a dominant sealing surface (145a) in contact with the mold core (120) and a subordinate sealing surface (145b) in contact with said second portion, the dominant sealing surface (145a) and the subordinate sealing surface (145b) having a difference in elevation in the lifting direction; and
a third portion disposed on a side of said second portion opposite said first portion, wherein said third portion comprises a cylindrical neck ring surface (200) facing a cylindrical surface (301) of the mold core (120), when in a mold-closed position;
**characterized in that** a vent gap (302) in the range of about 0.02 to 0.1 mm is provided between said cylindrical neck ring surface (200) and said cylindrical surface (301) of the mold core (120), when in a mold-closed position, wherein the vent gap (302) is positioned and configured to receive, in use, a small amount of molten plastic forming a small protrusion (303) on the dominant sealing surface (145a) adjacent the sealing surface step (65) of the molded plastic preform (26).

2. Apparatus according to claim 1, wherein said vent gap (302) is disposed substantially parallel to the lifting direction.

3. Apparatus according to claim 1, wherein said vent gap (302) is disposed at an acute angle with respect to the lifting direction.

4. Apparatus according to claim 3, wherein said vent gap (302) is disposed to angle circumferentially away from a longitudinal axis of the molded plastic preform (26).

5. Apparatus according to claim 1, further comprising a movement device which causes relative movement between said neck ring lifting structure (318a, 318b) and the molding structure, to eject the molded plastic preform (26) from the molding structure, said movement device causing said neck ring lifting structure (318a, 318b) to remain in contact with the end of the molded plastic preform (26) through a majority of an opening stroke.

6. Apparatus according to claim 1, wherein said neck ring lifting structure (318a, 318b) further includes:
a threaded portion configured to engage a helical thread in the neck of the molded plastic preform (26); and
a cylindrical portion configured to contact a surface of the molded plastic preform (26) which is substantially parallel with the lifting direction.

7. An injection molding machine, comprising:
a mold cavity configured to receive a molten material and form it into a molded plastic preform (26);
a mold core (120) configured to engage the molded plastic preform (26); and
an apparatus for ejecting a molded plastic preform (26) according to any one of the preceding claims.

8. A molded plastic preform (26) produced using the apparatus according to any one of claims 1 to 6 or the injection molding machine according to claim 7.

## Patentansprüche

1. Vorrichtung zum Auswerfen eines geformten Kunststoffvorformlings (26) aus einem Formungsaufbau, der einen Formkern (120) aufweist, wobei die Vorrichtung einen Halsring-Anhebeaufbau (318a, 318b) enthält, mit:
einem ersten Teil, der so ausgebildet ist, daß er einen Seitenteil des geformten Kunststoffvorformlings (26) entlang einer Linie kontaktiert, die im wesentlichen parallel zur Anheberichtung ist;
einem zweiten Teil, der so ausgebildet ist, daß er im wesentlichen fünfzig Prozent einer offenen Endfläche des geformten Kunststoffvorformlings (26) entlang einer Linie kontaktiert, die im wesentlichen senkrecht zur Anheberichtung ist, wobei eine umlaufende Dichtflächenstufe (65) des geformten Kunststoffvorformlings (26) an der offenen Endfläche des geformten Kunststoffvorformlings (26) definiert ist, einschließlich einer dominanten Dichtfläche (145a) in Kontakt mit dem Formkern (120) und einer untergeordneten Dichtfläche (145b) in Kontakt mit dem zweiten Teil, wobei die dominante Dichtfläche (145a) und die untergeordnete Dichtfläche (145b) einen Höhenunterschied in der Anheberichtung aufweisen; und
einem dritten Teil, der an einer Seite des zweiten Teiles gegenüber dem ersten Teil angeordnet ist, wobei der dritte Teil eine zylindrische Halsringfläche (200) aufweist, die einer zylindrischen Fläche (301) des Formkernes (120) in der Formschließstellung zugekehrt ist;
**dadurch gekennzeichnet, daß** ein Lüftungsspalt (302) im Bereich von etwa 0,02 bis 0,1 mm zwischen der zylindrischen Halsringfläche (200) und der zylindrischen Fläche (301) des Formkernes (120) in der Formschließstellung vorgesehen ist, wobei der Lüftungsspalt (302) positioniert und konfiguriert ist, um im Betrieb eine kleine Menge des geschmolzenen Kunststoffes aufzunehmen, die einen kleinen Vorsprung (303) an der dominanten Dichtfläche (145a) nahe der Dichtflächenstufe (65) des geformten Kunststoffvorformlings (26) bildet.

2. Vorrichtung nach Anspruch 1, bei welcher der Lüftungsspalt (302) im wesentlichen parallel zur Anheberichtung verläuft.

3. Vorrichtung nach Anspruch1 , bei welcher der Lüftungsspalt (302) unter einem spitzen Winkel zur Anheberichtung verläuft.

4. Vorrichtung nach Anspruch 3, bei welcher der Lüftungsspalt (302) so angeordnet ist, daß er sich in Umfangsrichtung von der Längsachse des Kunststoffvorformlings (26) unter einem Winkel wegerstreckt.

5. Vorrichtung nach Anspruch 1, die ferner eine Bewegungseinrichtung aufweist, welche eine Relativbewegung zwischen dem Halsring-Anhebeaufbau (318a, 318b) und dem Formungsaufbau bewirkt, um den geformten Kunststoffvorformling (26) aus dem Formungsaufbau auszuwerfen, wobei die Bewegungseinrichtung bewirkt, daß der Halsring-Anhebeaufbau (318a, 318b) in Kontakt mit dem Ende des geformten Kunststoffvorformlings (26) während des Hauptteiles eines Öffnungshubes bleibt.

6. Vorrichtung nach Anspruch 1, bei welcher der Halsring-Anhebeaufbau (318a, 318b) ferner umfaßt:
einen Gewindeteil, der so ausgebildet ist, daß er mit einem Wendelgewinde im Hals des geformten Kunststoffvorformlings (26) in Eingriff kommt; und
einen zylindrischen Teil, der so ausgebildet ist, daß er eine Fläche des geformten Kunststoff vorformlings (26) kontaktiert, die im wesentlichen parallel zur Anheberichtung ist.

7. Spritzgießmaschine, mit:
einem Formhohlraum, der so ausgebildet ist, daß er geschmolzenes Material aufnimmt und dieses zu einem geformten Kunststoffvorformling (26) formt,
einem Formkern (120), der so ausgebildet ist, daß er an dem geformten Kunststoffvorformling (26) angreift; und
einer Vorrichtung zum Auswerfen eines geformten Kunststoffvorformlings (26) gemäß einem der vorhergehenden Ansprüche.

8. Geformter Kunststoffvorformling (26), der unter Verwendung der Vorrichtung nach einem der Ansprüche 1 bis 6 oder der Spritzgießmaschine nach Anspruch 7 erzeugt wird.

## Revendications

1. Appareil destiné à éjecter une préforme en matière plastique moulée (26) d'une structure de moulage ayant un noyau de moule (120), l'appareil comportant une structure de soulèvement de bague de goulot (318a, 318b) ayant :
une première partie configurée pour venir en contact avec une partie latérale de ladite préforme en matière plastique moulée (26) le long d'une ligne sensiblement parallèle à une direction de soulèvement ;
une deuxième partie configurée pour venir en contact avec sensiblement cinquante pour cent d'une surface d'extrémité ouverte de la préforme en matière plastique moulée (26) le long d'une ligne sensiblement perpendiculaire à la direction de soulèvement, un palier de surface d'étanchéité périphérique (65) de la préforme en matière plastique moulée (26) étant défini sur la surface d'extrémité ouverte de la préforme en matière plastique moulée (26) comprenant une surface d'étanchéité principale (145a) en contact avec le noyau de moule (120) et une surface d'étanchéité secondaire (145b) en contact avec ladite deuxième partie, la surface d'étanchéité principale (145a) et la surface d'étanchéité secondaire (145b) ayant une différence d'élévation dans la direction de soulèvement ; et
une troisième partie disposée sur un côté de ladite deuxième partie opposée à ladite première partie, ladite troisième partie comportant une surface cylindrique de bague de goulot (200) face à une surface cylindrique (301) du noyau de moule (120), dans une position de moule fermé ;
**caractérisé en ce qu'**un espace de mise à l'air libre (302) dans la plage d'environ 0,02 à 0,1 mm est prévu entre ladite surface cylindrique de bague de goulot (200) et ladite surface cylindrique (301) du noyau de moule (120), dans une position de moule fermé, l'espace de mise à l'air libre (302) étant positionné et configuré pour recevoir, lors de l'utilisation, une petite quantité de matière plastique fondue formant une petite saillie (303) sur la surface d'étanchéité principale (145a) adjacente au palier de surface d'étanchéité (65) de la préforme en matière plastique moulée (26).

2. Appareil selon la revendication 1, dans lequel ledit espace de mise à l'air libre (302) est disposé de manière sensiblement parallèle à la direction de soulèvement.

3. Appareil selon la revendication 1, dans lequel ledit espace de mise à l'air libre (302) est disposé avec un angle aigu par rapport à la direction de soulèvement.

4. Appareil selon la revendication 3, dans lequel ledit espace de mise à l'air libre (302) est disposé avec un angle circonférentiellement à l'écart d'un axe longitudinal de la préforme en matière plastique moulée (26).

5. Appareil selon la revendication 1, comportant en outre un dispositif de déplacement qui provoque un déplacement relatif entre ladite structure de soulèvement de bague de goulot (318a, 318b) et la structure de moulage, afin d'éjecter la préforme en matière plastique moulée (26) de la structure de moulage, ledit dispositif de déplacement amenant ladite structure de soulèvement de bague de goulot (318a, 318b) à rester en contact avec l'extrémité de la préforme en ratière plastique moulée (26) grâce à une majorité d'une course d'ouverture.

6. Appareil selon la revendication 1, dans lequel ladite structure de soulèvement de bague de goulot (318a, 318b) comprend en outre :
une partie filetée configurée pour engager un filet hélicoïdal dans le goulot de la préforme en matière plastique moulée (26) ; et
une partie cylindrique configurée pour venir en contact avec une surface de la préforme en matière plastique moulée (26) qui est sensiblement parallèle avec la direction de soulèvement.

7. Machine de moulage par injection, comportant :
une cavité de moule configurée pour recevoir une matière fondue et la former en une préforme en matière plastique moulée (26) ;
un noyau de moule (120) configuré pour engager la préforme en matière plastique moulée (26) ; et
un appareil destiné à éjecter une préforme en matière plastique moulée (26) selon l'une quelconque des revendications précédentes.

8. Préforme en matière plastique moulée (26) fabriquée en utilisant l'appareil selon l'une quelconque des revendications 1 à 6 ou la machine de moulage par injection selon la revendication 7.
